# EUROPEAN PATENT APPLICATION

(11) **EP 1 119 123 A2**
(43) Date of publication of application: **25.07.2001**
(21) Application number: 00127301.0
(22) Date of filing: 13.12.2000
(51) Int. Cl.: H04J 3/06, H04J 3/14, H04Q 11/04

(54) **Apparatus and method for pointer alignment in a telecommunications system**

(30) Priority: 30.12.1999 US 476060
(71) Applicant: Alcatel USA Sourcing, L.P., Plano, Texas 75075-5813 (US)
(72) Inventor: Sawey, David Christopher, Richardson, Texas 75082 (US)
(74) Representative: Schäfer, Wolfgang, Dipl.-Ing.

(57) **Abstract**

An apparatus for facilitating selection among channels in a telecommunication system that transmits data in parallel in generally corresponding frames. Selected frames are payload frames containing an information payload having a locus and a payload pointer having a value identifying the locus. The system periodically aligns the frames by rebuilding them in parallel memory and outclocking rebuilt frames using a common clock to establish a rebuilt frame-set. The apparatus comprises: (a) a payload pointer follower connected with the memory for presenting the payload pointer value for each rebuilt frame; (b) a differentiator connected with each payload pointer follower for receiving the payload pointer values and generating a differentiation signal indicating differences among the payload pointer values for each rebuilt frame-set; and (c) a pointer observer for receiving the differentiation signal and generating equalizing signals for use by the parallel memory for adjusting the payload pointer values in later-arriving frames for establishing the locus in rebuilding the later-arriving frames appropriately to maintain or reduce the differentiation signal. The method comprises the steps of: (a) ascertaining the payload pointer value for each rebuilt frame; (b) generating a differentiation signal indicating differences among the payload pointer values for each rebuilt frame-set; (c) generating equalizing signals; and (d) employing the equalizing signals in selected parallel memory means for adjusting the payload pointer values in later-arriving frames to establish the intraframe locus appropriately to maintain or reduce the differentiation signal.

## Description

### BACKGROUND OF THE INVENTION

The present invention is directed to transmission of information in a telecommunication system, and especially to errorless switching between parallel information channels in a telecommunication system.

Some telecommunication systems convey information in parallel channels in order that there be an inherently increased security against lost information during transit. One example of such a telecommunication system is a SONET (Synchronous Optical Network) system. A SONET telecommunication system typically carries two channels, known as a "working" channel and a "protect" channel. The system may switch from the working channel to the protect channel under various predetermined conditions that may indicate corruption of information being received via the working channel. Such occasions indicating corruption of information may include, for example, excessive noise on the channel because of lightning or other natural phenomena, or maintenance being performed upon the working channel. It is important that switching from one channel to another channel - either from the working channel to the protect channel, or from the protect channel to the working channel - be accomplished without errors. That is, no "hits" should be incurred in the information when switching between parallel transmission channels.

The parallel channels are supposed to be synchronized in time, and are generally so synchronized when transmitted. However, upon arrival of the parallel signals at a receiver, there is commonly some misalignment because one of the parallel channels may have been routed via different switches than the other channel, or for some other reason. Thus, in such parallel transmitting telecommunication systems, the frames of the respective parallel channels are aligned to be time-coincident. In some such telecommunication systems, such as in the SONET system, there are overhead portions of information within a frame, and there are information payload portions of the frame. The information payload is situated in the same locus in each of the working and protect channel frames when transmitted. In the SONET standard governing operation of a SONET telecommunication system, the payload is allowed to "float" within the frame during transit. For that reason, merely aligning frames to effect time-coincidence between them is not enough to provide that switching between channels will be effected without a hit.

The information payload locus is identified by an information payload pointer within the frame, such as in a SONET frame. Preferably, and actually in a SONET system, the locus of the information payload pointer within the frame is fixed during transit. Thus, in addition to aligning frames, there must be an aligning of payload loci between the working and protect channels as well.

The need for such frame alignment has been addressed by such solutions as the pointer processing circuit disclosed in U.S. Patent 5,335,223 to Hatsumi Iino for "Pointer Processing Circuit in SONET System". However, when implementing the disclosure of Iino, one still is faced with possibly misaligned payloads in the now-aligned frames.

One approach to aligning payloads within frames is disclosed in U.S. Patent 5,051,979 to S. Chandhuri and A. Malone for "Method and Apparatus for Errorless Switching". The disclosure of the '979 patent requires two complete pointer processor functions to accomplish payload alignment. That is, the '979 disclosure required the generation of two distinct SONET frames before performing a hitless selection. The circuitry required to implement the '979 disclosure was complex in its requirement to regenerate a new SONET frame for each of the two channels before an errorless switch between the channels can occur.

The above shortcoming in the '979 patent was described and overcome in the U.S. Patent Application Ser. 09/354,865, filed July 16, 1999, by Edmund K. Cher and David C. Sawey for "Hit-Less Switching Pointer Aligner Apparatus and Method", which application is assigned to the assignee of the present application. The Cher Application solved the problems noted regarding the solution offered by the '979 patent. However, the Cher Application solution itself suffers from requiring a high degree of connectivity between two pointer processing elements. If the Cher Application solution is employed in a system where the two pointer processors are separated (e.g., on two different circuit cards), it would be a difficult application. In fact, remote location of pointer processors is not uncommon in real-world telecommunication systems.

There is a need for an apparatus and method for achieving information payload pointer alignment between pointer processors located remotely from each other, such as being located on two different circuit cards. The present invention achieves such a result by providing a pointer observer element that compares generated pointers from the two pointer generators and provides feedback to the pointer generators to bring the pointers into alignment.

### SUMMARY OF THE INVENTION

An apparatus for facilitating error-free selection among a plurality of communication channels in a telecommunication system. The telecommunication system transmits substantially similar data generally in parallel in the communication channels. The data is arranged in a plurality of generally time-coincident, substantially corresponding frames in at least a first communication channel and a second communication channel of the communication channels. Selected frames of the plurality of frames are information payload frames, each containing a respective information payload having at least one intraframe locus and an information payload pointer having a payload pointer value identifying the intraframe locus. The system periodically aligns the corresponding frames by rebuilding the corresponding frames in parallel memory means in at least each of the first communication channel and the second communication channel. During the aligning the system effects outclocking of rebuilt frames using a first common clock so that corresponding rebuilt frames establish a rebuilt frame-set.

The apparatus comprises: (a) for at least each of the first communication channel and the second communication channel, a payload pointer follower means connected with the memory means for receiving the rebuilt frames; the payload pointer follower means presents the payload pointer value for each rebuilt frame; (b) a differentiating means connected with each payload pointer follower means for receiving the payload pointer values and generating a differentiation signal indicating differences among the payload pointer values for each rebuilt frame-set; and (c) a pointer observer means connected with the differentiating means and with the memory means for at least the first communication channel and the second communication channel; the pointer observer means receives the differentiation signal and generates a plurality of equalizing signals; the equalizing signals are provided to selected memory means of the parallel memory means in at least each of the first communication channel and the second communication channel for adjusting the payload pointer values in later-arriving frames of the plurality of frames for establishing the intraframe locus in rebuilding the later-arriving frames appropriately to maintain or reduce the differentiation signal associated with the later-arriving frames.

The present invention also contemplates a method for facilitating error-free selection among a plurality of communication channels in a telecommunication system transmitting substantially similar data generally in parallel in the channels. The data is arranged in a plurality of generally time-coincident, substantially corresponding frames in at least a first communication channel and a second communication channel. Selected frames are information payload frames containing a respective information payload having at least one intraframe locus and an information payload pointer having a payload pointer value identifying the at least one intraframe locus. The system periodically aligns the corresponding frames by them in parallel memory means in at least each of the first communication channel and the second communication channel. The system outclocks rebuilt frames using a common clock so that corresponding rebuilt frames in at least the first communication channel and the second communication channel establish a rebuilt frame-set. The method comprises the steps of: (a) for at least each of the first communication channel and the second communication channel, ascertaining the payload pointer value for each rebuilt frame; (b) generating a differentiation signal indicating differences among the payload pointer values for each rebuilt frame-set; (c) generating a plurality of equalizing signals; and (d) employing the plurality of equalizing signals in selected memory means of the parallel memory means in at least each of the first communication channel and the second communication channel for adjusting the payload pointer values in later-arriving frames of the plurality of frames for establishing the intraframe locus in rebuilding the later-arriving frames appropriately to maintain or reduce the differentiation signal associated with the later-arriving frames.

Frame aligning to effect time-coincidence in corresponding frame-sets is commonly carried out in a SONET system, for example, using elastic buffer memories in parallel in the working and protect channels through a process of rebuilding frames. Thus, there is an opportunity to relocate payloads within corresponding frames in a frame-set during such a rebuilding to improve alignment of information payloads. When the payloads are aligned, the system can switch between channels without experiencing any errors, or hits.

Such payload alignment is often a stepwise correction process. For example, in a SONET system the information payload pointer value (the value that identifies the starting byte of the information payload within the frame) may only be changed one byte per adjustment. Thus, when a difference between loci of information payloads in a frame-set (i.e., corresponding frames in the two channels) is perceived (e.g., by a difference in payload pointer values), changes are effected in later-arriving frame-sets, because the frame-set in which the differences are noted has already been transmitted on through the system. The next-arriving frame-set may have its payload pointer values altered appropriately to reduce differences in payload loci during the rebuilding that is effected to accomplish frame alignment for time-coincidence. Thus, if the locus difference for information payloads in frames of a frame-set between the two channels is greater than can be corrected for in one iteration, it will be necessary to effect the required correction stepwise over more than one later-arriving frame-set.

Some smoothing of corrections in payload pointer values, and the consequent relocating of the payload locus within the frame, can be accomplished by distributing corrections "upstream" toward the transmitter of the communication signal. In such manner, the amount of misalignment in the information payloads of the frame-set may be reduced along the transmission path to minimize the required size of the parallel memory means at the receiver. Such an implementation of the present invention may be effected "upstream" so far as the two-channel transmission extends. SONET systems periodically combine the working and protect channel into a single channel for splitting anew into two channels for transmission. By such combining and splitting anew, integrity of the duplication of signals between channels is assured. Clearly, corrections for payload misalignment may not be distributed "upstream" beyond the last such combining-and-splitting-anew station in the system.

It is, therefore, an object of the present invention to provide an apparatus and method for improved error-free selection among a plurality of communication channels in a telecommunication system that is less complex in construction and implementation than earlier apparatuses and methods.

It is a further object of the present invention to provide an apparatus and method for improved error-free selection among a plurality of communication channels in a telecommunication system that may readily accommodate implementation in a system having pointer processors remotely situated from each other.

Further objects and features of the present invention will be apparent from the following specification and claims when considered in connection with the accompanying drawings, in which like elements are labeled using like reference numerals in the various figures, illustrating the preferred embodiments of the invention.

### BRIEF DESCRIPTION OF THE DRAWINGS

Fig. 1 is a schematic diagram of a telecommunication system employing parallel channel transmission for information integrity.

Fig. 2 is a schematic diagram of the preferred embodiment of the apparatus of the present invention.

Fig. 3 is a schematic diagram of a telecommunication system with parallel channel transmission for information integrity employing the preferred embodiment of the apparatus of the present invention and using repeaters for transiting long distances.

Fig. 4 is a flow chart illustrating the preferred embodiment of the method of the present invention.

### DETAILED DESCRIPTION OF THE PREFERRED EMBODIMENT

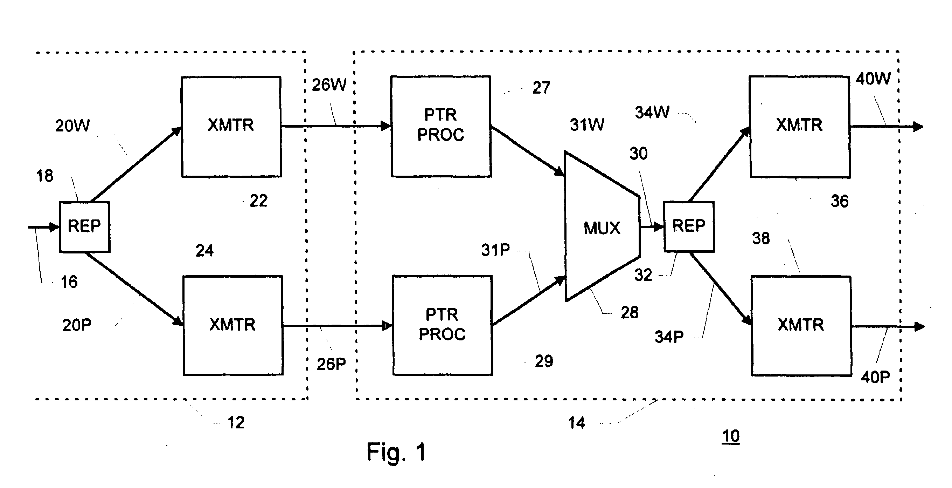

Fig. 1 is a schematic diagram of a telecommunication system employing parallel channel transmission for information integrity. In Fig. 1, a telecommunication system 10 includes a transmitter station 12 and a receiver station 14. Transmitter station 12 is shown only in part, as will be apparent. In Fig. 1, a portion of transmitter station 12 processes a signal on a single-channel signal 16 connected with a replicator 18. Replicator 18 replicates the signal received on single-channel 16 for presentation on a working channel 20W and a protect channel 20P. Channels 20W, 20P are substantially parallel channels carrying complimentary signals; the signal on channel 20P is virtually a copy of the signal carried on channel 20W. Channels 20W, 20P deliver their respective signals to transmitters 22, 24. Transmitter 22 transmits a first signal on a working transmission channel 26W. Transmitter 24 transmits a second signal on a protect transmission channel 26P. The second signal carried on protect transmission channel 26P is substantially a copy of the first signal carried on working transmission channel 26W.

Receiver station 14 receives signals from channels 26W, 26P at pointer processors 27, 29. Pointer processors 27, 29 frame-align the signals carried on transmission channels 26W, 26P to establish the two signals in time-coincident complementary frames establishing a succession of frame-sets. Pointer processors 27, 29 also align payload loci and associated payload pointers of respective frame-sets. That is, pointer processors 27, 29 adjust payload pointer values for respective frames in frame-sets so that each frame-set is frame-aligned and payload-aligned. Pointer processors 27, 29 present frame-aligned and payload-aligned frame-sets via internal channels 31W, 31P to a multiplexer 28. Multiplexer 28 employs predetermined criteria for selecting the signal carried by one of internal channels 31W, 31P for forwarding on a single-channel 30 to a replicator 32. Replicator 32 replicates the signal received on single-channel 30 for presentation on a working channel 34W and a protect channel 34P. Channels 34W, 34P are substantially parallel channels carrying complimentary signals; the signal on channel 34P is virtually a copy of the signal carried on channel 34W. Channels 34W, 34P deliver their respective signals to transmitters 36, 38. Transmitter 36 transmits a first signal on a working transmission channel 40W. Transmitter 38 transmits a second signal on a protect transmission channel 40P. The second signal carried on protect transmission channel 40P is substantially a copy of the first signal carried on working transmission channel 40W. Channels 40W, 40P are delivered downstream to another element of telecommunication system 10 (not shown in Fig. 1) for ultimate delivery of the communication information to an intended receiver.

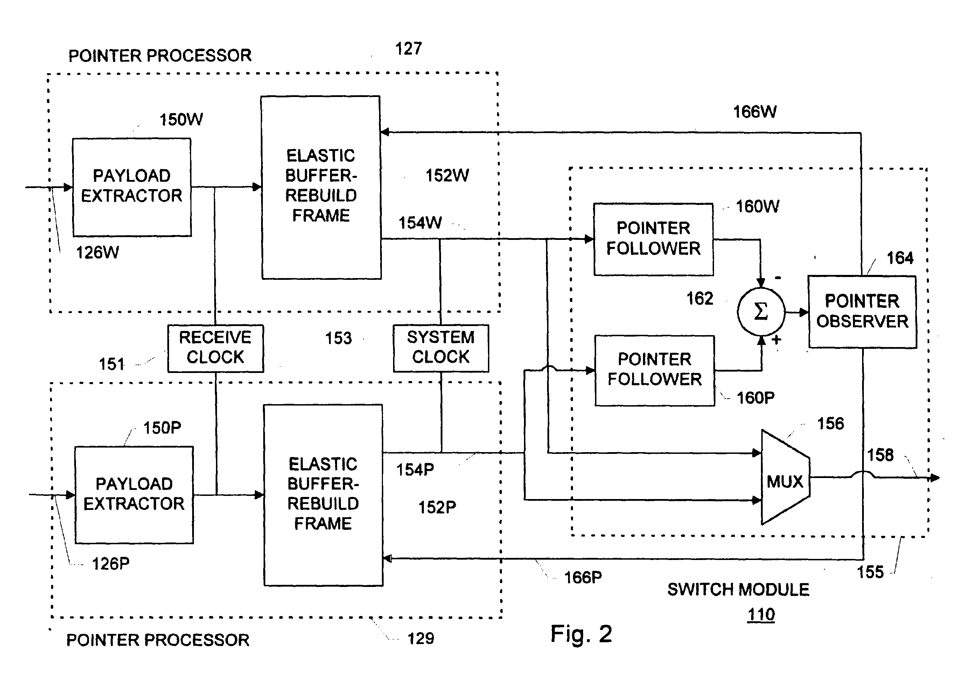

Fig. 2 is a schematic diagram of the preferred embodiment of the apparatus of the present invention. In Fig. 2, a receiver station 110 includes a first pointer processor 127 and a second pointer processor 129. In keeping with the terminology developed in connection with describing Fig. 1, first pointer processor 127 is associated with a working transmission channel 126W, and second pointer processor 129 is associated with a protect transmission channel 126P.

Telecommunication systems often rebuild entire frames in their operation, but to avoid excessive irrelevant detail in order to simplify the explanation regarding the present invention, this description will address only to pertinent portions of message processing that relate to operation of the present invention. It should be understood that frame rebuilding includes all overhead information as well as payload information. Such frame rebuilding is commonly accomplished in memory-rebuild frame means. Such memory-rebuild frame means are preferably embodied in an elastic buffer configuration having sufficient capacity to accommodate the operation required for "dissecting" a frame and rebuilding the frame in a desired configuration. The desired rebuilt configuration may be established by predetermined criteria, or may be determined by feedback provided for effecting payload alignment, as contemplated by the present invention. The embodiment of a memory-rebuild frame means as contemplated by the present invention includes any component having storage capacity and a facility for rearranging parts of frames into a desired order. The required facility may be embodied in software, firmware, hardware or a combination of those solutions.

First pointer processor 127 receives signals on working transmission channel 126W at a payload extractor 150W, and second pointer processor 129 receives signals on protect transmission channel 126P at a payload extractor 150P. Payload extractors 150W, 150P extract payload information from frames received and enter the extracted payload information into elastic buffer-rebuild frame units 152W, 152P. The payload information is preferably clocked into elastic buffer-rebuild frame units 152W, 152P using a common receive clock 151. Alternatively, each elastic buffer-rebuild frame unit 152W, 152P may employ its own respective receive clock for clocking in payload information. Elastic buffer-rebuild frame units 152W, 152P rebuild frames received and, in the aspect of such rebuilding that pertains to the present invention, locate the payload of each rebuilt frame according to the payload pointer value then extant. One must keep in mind that some telecommunication system standards, such as the SONET standard, allow payload to "float" within a frame during transit. In such a case, it is not necessarily true that frames in a frame-set carried on parallel transmission channels 126W, 126P will have their respective payloads situated in precisely the same loci. They will have different payload pointer values because the payload pointer values indicate the loci of the payload information in the respective frames. When the payload pointer values differ, and therefore the loci of the information payloads differ between frames in a frame-set, there will be an error if the telecommunication system switches from one channel to another channel. It is this error which is avoided by the present invention.

Elastic buffer-rebuild frame units 152W 152P present rebuilt frame-sets that have been frame-aligned (but not necessarily payload-aligned) on internal channels 154W, 154P to switch module 155. Preferably, frames in a frame-set are each respectively clocked out of elastic buffer-rebuild frame units 152W, 152P using a common clock, such as system clock 153 that is used to clock activities downstream of elastic buffer-rebuild frame units 152W, 152P.

Switch module 155 includes a multiplexer 156, pointer follower units 160W, 160P, a differentiator, or difference unit 162 and a pointer observer unit 164. Internal channels 154W, 154P present signals carried thereon to multiplexer 156. Multiplexer 156 operates on signals received from internal channels 154W, 154P in a manner similar to the operation of multiplexer 28 with signals received on internal channels 31W, 31P (Fig. 1). In order to avoid prolixity, it may be concluded simply that signals carried on one of internal channels 154W, 1554P will be presented on a single-channel 158 by multiplexer 156 for further processing downstream.

Internal channels 154W, 154P also present signals carried thereon to pointer follower units 160W, 160P. Pointer follower units 160W, 160P extract payload pointer values from frames received on their respective internal channels 154W, 154P and pass those values to difference unit 162. Payload pointer follower units 160W, 160P may be embodied in any payload pointer follower means that can recognize and deal with payload pointer values contained in frames of frame-sets provided to them. In their preferred embodiment, payload follower pointer means according to the present invention may be embodied in software, firmware, hardware or a combination of those solutions. The most preferred embodiment of a payload pointer follower means in the present invention is a software implementation.

Difference unit 162 ascertains a difference value reflecting modulo differences in payload pointer values received on internal channels 154W, 154P. That is, difference unit 162 determines the amount of misalignment existing in respective frames in frame-sets appearing on internal channels 154W, 154P. Difference unit 162 is an embodiment of a differentiator means, or difference means used in practicing the present invention.

In its simplest embodiment for addressing a communication system employing only two parallel channels for carrying corresponding frame-sets, and assuming that the maximum payload difference is expected to be less than one-half of the range that may be addressed by the payload pointer, the difference means may be embodied in a summing device that determines an arithmetic difference between two payload pointer values provided to it. In the case where the maximum payload difference is expected to be larger than one-half of the range that may be addressed by the payload pointer, the difference means may employ additional information, such as additional overhead information, to determine the amount of misalignment existing over and above the amount that can be determined by using the payload pointer values alone. In the case where more than two channels are employed by the telecommunication system, the difference means may be constructed to provide a plurality of difference indications among the various payload pointer values. In an alternate example, difference means used in telecommunication systems having more than two channels may perform a weighting function to identify predetermined relationships among the various channels from which payload pointer values are received. The difference means of the present invention may be embodied in software, firmware, hardware or a combination of those solutions. In the preferred embodiment of the present invention, the difference means is embodied in a software solution.

Recall that frames appearing on internal channels 154W, 154P have been frame-aligned. Thus, misalignment of payload pointer values (indicating misalignment of payload loci in the frames of a frame-set) are entirely attributable to information loci misalignment. A signal indicating the sensed difference between payload pointer values in frames received on internal channels 154W, 154P is provided by difference unit 162 to pointer observer unit 164.

The pointer observer means may be embodied in any device that can ascertain the difference signal received from difference unit 162 and translate that difference signal into adjustment signals appropriate for use in maintaining payload pointer alignments (for example, when there is no indication of unacceptable misalignment), or for use in reducing misalignment found to exist. In its simplest embodiment for addressing a communication system employing only two parallel channels for carrying corresponding frame-sets, the pointer observer means may, for example, merely halve the difference signal received from difference unit 162 and create adjustment signals for the two channels based upon those half-magnitude signals. The direction of adjustment to be effected by the respective channels may be based upon the sign of the difference signal received from difference unit 162. In situations where two or more channels are employed in a telecommunication system, the pointer observer means may, for example, be configured to exercise a weighting operation in determining the adjustment signals to be produced. The pointer observer means of the present invention may be embodied in software, firmware, hardware or a combination of those solutions. In the preferred embodiment of the present invention, the pointer observer means is embodied in a software solution.

Pointer observer unit 164 uses the difference signal received from difference unit 162 to produce adjustment signals on feedback lines 166W, 166P to respective elastic buffer-rebuild frame units 152W, 152P. Elastic buffer-rebuild frame units 152W, 152P employ adjustment signals received via feedback lines 166W, 166P to adjust payload pointer values in later arriving frames to reduce misalignment between payloads in frame-sets. By so reducing misalignment of payloads, the difference signal provided by difference unit 162 to pointer observer unit 164 will be reduced. Ultimately, there will be zero misalignment; it is in such a situation that the present invention seeks to maintain alignment, to maintain a zero difference-indicating signal provided by difference unit 162 to pointer observer 164.

Some telecommunication system standards limit the amount of adjustment that can be imposed on a payload pointer value in a given adjustment. The SONET standard, for example, limits such payload pointer adjustments to one byte every three frames. In accommodating such a limitation, if there is a misalignment of greater than one byte between payload pointer values in frames in a frame-set, full correction will be iteratively accomplished. That means that payload-misaligned frame-sets will be passed from multiplexer 156 on single-channel 158 (Fig. 2) until the misalignment may be fully corrected in the required iterative stepwise fashion in such circumstances.

Absent such limitations as may be imposed by a telecommunication standard, one must ensure that the size of elastic buffer-rebuild frame units 152W, 152P are large enough to accommodate the greatest amount of adjustment expected to be required in the system. If too little capacity is provided for elastic buffer-rebuild frame units 152W, 152P, there can be buffer spillover. Buffer spillover is an undesirable occurrence because it can introduce bit errors into the transmitted information.

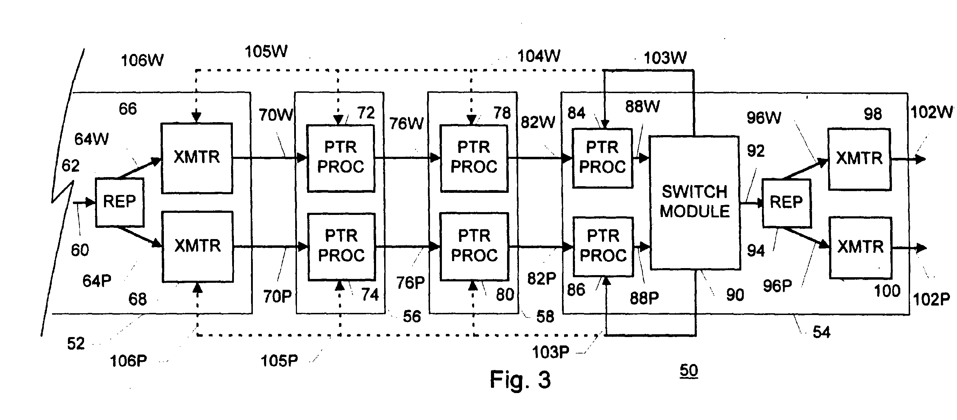

Fig. 3 is a schematic diagram of a telecommunication system with parallel channel transmission for information integrity employing the preferred embodiment of the apparatus of the present invention and using repeaters for transiting long distances. In Fig. 3, a telecommunication system 50 includes a transmitter station 52, a receiver station 54, and repeaters 56, 58. Transmitter station 52 operates substantially in the same manner as transmitter station 12 (Fig. 1). That is, transmitter station 52 receives a signal on a single-channel 60 at a replicator 62. Replicator 62 presents substantially duplicate signals on a working channel 64W and a protect channel 64P. Channels 64W, 64P are substantially parallel channels carrying complimentary signals. Channels 64W, 64P deliver their respective signals to transmitters 66, 68. Transmitter 66 transmits a first signal on a working transmission channel 70W. Transmitter 68 transmits a second signal on a protect transmission channel 70P. The second signal carried on protect transmission channel 70P is substantially a copy of the first signal carried on working transmission channel 70W.

Transmission channels 70W, 70P deliver their respective signals to repeater 56. Repeater 56 receives signals carried on transmission channels 70W, 70P in pointer processors 72, 74. Pointer processors 72, 74 frame-align the signals carried on transmission channels 70W, 70P to establish the two signals in time-coincident complementary frames establishing a succession of frame-sets. Pointer processors 72, 74 also align payload loci and associated payload pointers of respective frame-sets. That is, pointer processors 72, 74 adjust payload pointer values for respective frames in frame-sets so that each frame-set is frame-aligned and payload-aligned. Repeater 56 presents aligned signals on transmission channels 76W, 76P for delivery to repeater 58. Repeater 58 and its associated pointer processors 78, 80 frame-align and payload-align signals received on transmission channels 76W, 76P in substantially the same manner as was described in connection with repeater 56. In the interest of avoiding prolixity, that description will not be repeated in detail. The result is that repeater 58 presents aligned signals on transmission channels 82W, 82P for delivery to receiver station 54.

Telecommunication system 50 is merely a representative illustration. There could be additional repeaters between transmitter station 52 and receiver station 54 than are shown in Fig. 3. In any event, showing two such repeaters adequately illustrates the operation of the present invention without presenting an unduly cluttered illustration.

Continuing to refer to Fig. 3, receiver station 54 operates in a manner similar to receiver station 110 (Fig. 2). Thus, receiver station 54 receives signals carried on transmission channels 82W, 82P at pointer processors 84, 86. Pointer processors 84, 86 process their respective signals in a manner substantially similar to the handling of signals by pointer processors 127, 129 (Fig. 2). In order to avoid prolixity, repetitive description will be avoided here where it will not aid in understanding the present invention. Signals presented on internal channels 88W, 88P to switch module 90 are selectively presented at a single-channel 92 for further processing downstream by replicator 94, parallel channels 96W, 96P and transmitters 98, 100 to transmit substantially identical signals on transmission channels 102W, 102P in a manner substantially the same as the operation of transmitter station 52, described earlier.

Of significance regarding telecommunication system 50 (Fig. 3) is the provision of feedback lines 103W, 103P; 104W, 104P; 105W, 105P; 106W, 106P. Such a feedback arrangement allows distribution of payload pointer misalignment correction further upstream than merely to the next immediate pointer processor unit, as was the case described in connection with Fig. 2. By distributing payload pointer value adjustment upstream there is an opportunity to reduce the amount of memory required at the receiver to correct large misalignments and to reduce the likelihood of encountering the maximum payload misalignment limitation inherent in the simplest embodiment. Such distributed corrective action, or distributed adjustment, may extend upstream as far as to the next preceding split of a single signal by a replicator, such as replicator 62 in Fig. 3. The implementation of decision criteria by a pointer observer unit, such as pointer observer unit 164 (Fig. 2) in such a distributed adjustment arrangement would be more complex, but not without rewards. In its simplest implementation, difference unit may provide a simple difference-indicating signal to pointer observer unit 164, and pointer observer unit 164 may instruct each of elastic buffer-rebuild frame units 152W, 152P to adjust one-half the difference in a manner to reduce the difference. The decision criteria employed by a pointer observer unit, such as pointer observer unit 164 (Fig. 2) may be implemented in hardware, software, firmware or any combination of those embodiments. Preferably the decisions will be executed in software employing logical criteria anticipating different levels of service desired, different amounts of pointer misalignment, and similar factors.

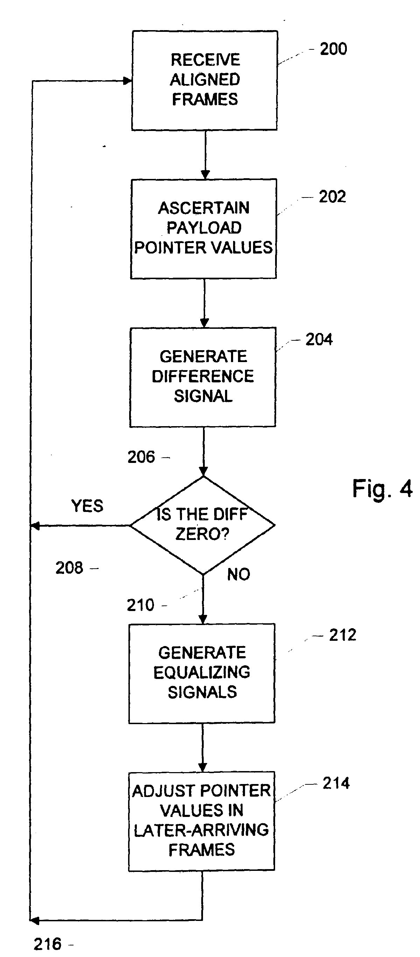

Fig. 4 is a flow chart illustrating the preferred embodiment of the method of the present invention. In Fig. 4, communication data is received in parallel on a plurality of communication channels in a succession of frame-aligned frame-sets; as indicated by a block 200. In order to simplify the explanation of the method of the present invention, no indication is made in Fig. 4 of multiple channels. The method continues with the ascertaining of payload pointer values for each of the frames in the frame-sets, as indicated by a block 202.

A difference signal is generated indicating differences among frames in each of the frame-sets, as indicated by a block 204. A query is posed: "Is the difference signal representative of a zero difference?", as indicated by a query block 206. That query is to determine whether there is misalignment among the payloads of frames in the frame-set being considered. If the response to the query posed by query block 206 is "Yes", then the method proceeds via YES response path 208 to return to block 200 for beginning the method anew with a later-arriving frame-set. If the response to the query posed by query block 206 is "No", then the method proceeds via NO response path 210, and a set of equalizing signals for use in adjusting payload pointer values to establish closer alignment among frames in the frame-set are generated, as indicated by a block 212. The method proceeds by employing the equalizing signals generated according to block 212 to adjust payload pointer values in at least one later-arriving frame-set, as indicated by a block 214.

There may be situations where full adjustment among frames in a frame set may not be accomplished in one iteration of the method of the present invention. Such a result may be caused by limitations imposed by telecommunication system standards, as discussed earlier by way of example in connection with the SONET system. Such a result may be caused by there being too little capacity in elastic buffer-rebuild frame units, such as elastic buffer-rebuild frame units 152W, 152P (Fig. 2). In any event, the method of the present invention returns to block 200 via a return line 216 to begin the method anew. Such a new beginning of the method may be to overcome having incompletely adjusted payload pointer values to achieve payload alignment among frames in a frame-set; a new beginning may as well be a desirable iterative application of the method of the present invention to continually ensure payload alignment among frames in later-arriving frame-sets. It is this latter iterative application of the method of the present invention that is the preferred employment of the method.

It is to be understood that, while the detailed drawings and specific examples given describe preferred embodiments of the invention, they are for the purpose of illustration only, that the apparatus and method of the invention are not limited to the precise details and conditions disclosed and that various changes may be made therein without departing from the spirit of the invention which is defined by the following claims:

## Claims

1. An apparatus for facilitating error-free selection among a plurality of communication channels in a telecommunication system; said telecommunication system transmitting substantially similar data generally in parallel in said plurality of communication channels; said data being arranged in a plurality of generally time-coincident, substantially corresponding frames in at least a first communication channel and a second communication channel of said plurality of communication channels; selected frames of said plurality of frames being information payload frames, each respective information payload frame containing a respective information payload having at least one intraframe locus and an information payload pointer having a payload pointer value identifying said at least one intraframe locus; said system periodically aligning said corresponding frames; said system rebuilding said corresponding frames in parallel memory means in at least each of said first communication channel and said second communication channel during said aligning for outclocking rebuilt frames using a first common clock; corresponding said rebuilt frames in at least said first communication channel and said second communication channel establishing a rebuilt frame-set; the apparatus comprising:
(a) for at least each of said first communication channel and said second communication channel, a payload pointer follower means connected with said memory means for receiving said rebuilt frames; said payload pointer follower means presenting said payload pointer value for each said rebuilt frame;
(b) a differentiating means connected with each said payload pointer follower means for receiving said payload pointer values and generating a differentiation signal indicating differences among said payload pointer values for each said rebuilt frame-set; and
(c) a pointer observer means for observing said differentiation signal; said pointer observer means being connected with said differentiating means and with said memory means for at least said first communication channel and said second communication channel; said pointer observer means receiving said differentiation signal and generating a plurality of equalizing signals; said plurality of equalizing signals being provided to said selected memory means of said parallel memory means in at least each of said first communication channel and said second communication channel for adjusting said payload pointer values in later-arriving frames of said plurality of frames for establishing said intraframe locus in rebuilding said later-arriving frames appropriately to maintain or reduce said differentiation signal associated with said later-arriving frames.

2. An apparatus for facilitating error-free selection among a plurality of communication channels in a telecommunication system as recited in Claim 1 wherein said plurality of communication channels is said first communication channel and said second communication channel.

3. An apparatus for facilitating error-free selection among a plurality of communication channels in a telecommunication system as recited in Claim 1 wherein said plurality of frames are read into said plurality of parallel memory means using at least one second clock.

4. An apparatus for facilitating error-free selection among a plurality of communication channels in a telecommunication system as recited in Claim 3 wherein said first common clock and said at least one second clock operate independently.

5. A method for facilitating error-free selection among a plurality of communication channels in a telecommunication system; said telecommunication system transmitting substantially similar data generally in parallel in said plurality of communication channels; said data being arranged in a plurality of generally time-coincident, substantially corresponding frames in at least a first communication channel and a second communication channel of said plurality of communication channels; selected frames of said plurality of frames being information payload frames, each respective information payload frame containing a respective information payload having at least one intraframe locus and an information payload pointer having a payload pointer value identifying said at least one intraframe locus; said system periodically aligning said corresponding frames; said system rebuilding said corresponding frames in parallel memory means in at least each of said first communication channel and said second communication channel during said aligning for outclocking rebuilt frames using a first common clock; corresponding said rebuilt frames in at least said first communication channel and said second communication channel establishing a rebuilt frame-set; the method comprising said steps of:
(a) for at least each of said first communication channel and said second communication channel, ascertaining said payload pointer value for each said rebuilt frame;
(b) generating a differentiation signal indicating differences among said payload pointer values for each said rebuilt frame-set;
(c) generating a plurality of equalizing signals; and
(d) employing said plurality of equalizing signals in selected memory means of said parallel memory means in at least each of said first communication channel and said second communication channel for adjusting said payload pointer values in later-arriving frames of said plurality of frames for establishing said intraframe locus in rebuilding said later-arriving frames appropriately to maintain or reduce said differentiation signal associated with said later-arriving frames.

6. A method for facilitating error-free selection among a plurality of communication channels in a telecommunication system as recited in Claim 5 wherein said plurality of communication channels is said first communication channel and said second communication channel.

7. A method for facilitating error-free selection among a plurality of communication channels in a telecommunication system as recited in Claim 5 wherein said plurality of frames are read into said plurality of parallel memory means using at least one second clock.

8. A method for facilitating error-free selection among a plurality of communication channels in a telecommunication system as recited in Claim 7 wherein said first common clock and said at least one second clock operate independently

9. An apparatus for improving information payload alignment in parallel traffic organized in a plurality of substantially corresponding successive frame-pairs carried in a first communication channel and a second communication channel in a telecommunication system; said plurality of frame-pairs including payload frame-pairs; each frame in a payload frame-pair containing a respective information payload having an intraframe locus and a payload pointer having a payload pointer value identifying said intraframe locus; said system periodically time-aligning selected frame-pairs in parallel frame rebuilding means in said first communication channel and said second communication channel to generate rebuilt frame-pairs; the apparatus comprising:
(a) payload pointer follower means for determining said payload pointer value for each said frame in said payload frame-pairs, said payload pointer follower means being connected with said frame rebuilding means in said first communication channel and said second communication channel and presenting successive payload pointer values for successive rebuilt said payload frame-pairs;
(b) a difference means for determining a difference between said payload pointer values for each said rebuilt payload frame-pair; said difference means being connected with said payload pointer follower means to receive said payload pointer values; said difference means generating a difference signal indicating said difference; and
(c) a pointer observer means for determining correction needed for improving alignment between said intraframe loci in said rebuilt payload frame-pair; said pointer observer means being connected with said difference means and with said frame rebuilding means in at least one of said first communication channel and said second communication channel; said pointer observer means receiving said difference signal and employing said difference signal to generate at least one equalizing signal; said frame rebuilding means in at least one of said first communication channel and said second communication channel receiving said at least one equalizing signal for adjusting said payload pointer values in later-arriving said payload frame-pairs to reduce said difference signal associated with said later-arriving payload frame-pairs.

10. An apparatus for improving information payload alignment in parallel traffic organized in a plurality of substantially corresponding successive frame-pairs carried in a first communication channel and a second communication channel in a telecommunication system as recited in Claim 9 wherein said pointer observer means is connected with said frame rebuilding means in said first communication channel and in said second communication channel.

11. An apparatus for improving information payload alignment in parallel traffic organized in a plurality of substantially corresponding successive frame-pairs carried in a first communication channel and a second communication channel in a telecommunication system as recited in Claim 9 wherein said pointer observer means employs said difference signal to generate equalizing signals for said frame rebuilding means in said first communication channel and said second communication channel.

12. An apparatus for improving information payload alignment in parallel traffic organized in a plurality of substantially corresponding successive frame-pairs carried in a first communication channel and a second communication channel in a telecommunication system as recited in Claim 11 wherein said frame rebuilding means in said first communication channel and said second communication channel receive said equalizing signals for adjusting said payload pointer values in later-arriving said payload frame-pairs.

13. An apparatus for improving information payload alignment in parallel traffic organized in a plurality of substantially corresponding successive frame-pairs carried in a first communication channel and a second communication channel in a telecommunication system as recited in Claim 10 wherein said pointer observer means employs said difference signal to generate equalizing signals for said frame rebuilding means in said first communication channel and said second communication channel.

14. An apparatus for improving information payload alignment in parallel traffic organized in a plurality of substantially corresponding successive frame-pairs carried in a first communication channel and a second communication channel in a telecommunication system as recited in Claim 13 wherein said frame rebuilding means in said first communication channel and said second communication channel receive said equalizing signals for adjusting said payload pointer values in later-arriving said payload frame-pairs.

15. An apparatus for improving information payload alignment in parallel traffic organized in a plurality of substantially corresponding successive frame-pairs carried in a plurality of communication channels between a transmitter station and a receiver station via at least one repeater station in a telecommunication system; said plurality of frame-pairs including payload frame-pairs; each frame in a payload frame-pair containing a respective information payload having an intraframe locus and a payload pointer having a payload pointer value identifying said intraframe locus; said system periodically time-aligning selected frame-pairs in parallel frame rebuilding means in said plurality of communication channels at selected stations of said transmitter station, said at least one repeater station and said receiver station to generate rebuilt frame-pairs; the apparatus comprising:
(a) payload pointer follower means for determining said payload pointer value for each said frame in said payload frame-pairs, said payload pointer follower means being connected with said frame rebuilding means in said plurality of communication channels and presenting successive payload pointer values for successive rebuilt said payload frame-pairs;
(b) a difference means for determining a difference between said payload pointer values for each said rebuilt payload frame-pair; said difference means being connected with said payload pointer follower means to receive said payload pointer values; said difference means generating a difference signal indicating said difference; and
(c) a pointer observer means for determining correction needed for improving alignment between said intraframe loci in said rebuilt payload frame-pair; said pointer observer means being connected with said difference means and with said frame rebuilding means at at least one of said selected stations in at least one channel of said plurality of communication channels; said pointer observer means receiving said difference signal and employing said difference signal to generate at least one equalizing signal; said frame rebuilding means at at least one of said selected stations in at least one of said plurality of communication channels receiving said at least one equalizing signal for adjusting said payload pointer values in later-arriving said payload frame-pairs to reduce said difference signal associated with said later-arriving payload frame-pairs.

16. An apparatus for improving information payload alignment in parallel traffic organized in a plurality of substantially corresponding successive frame-pairs carried in a plurality of communication channels between a transmitter station and a receiver station via at least one repeater station in a telecommunication system as recited in Claim 15 wherein said plurality of communication channels is a first communication channel and a second communication channel.

17. An apparatus for improving information payload alignment in parallel traffic organized in a plurality of substantially corresponding successive frame-pairs carried in a plurality of communication channels between a transmitter station and a receiver station via at least one repeater station in a telecommunication system as recited in Claim 15 wherein said frame rebuilding means at each said selected stations in at least one of said plurality of communication channels receives said at least one equalizing signal for adjusting said payload pointer values in later-arriving said payload frame-pairs to reduce said difference signal associated with said later-arriving payload frame-pairs.

18. An apparatus for improving information payload alignment in parallel traffic organized in a plurality of substantially corresponding successive frame-pairs carried in a plurality of communication channels between a transmitter station and a receiver station via at least one repeater station in a telecommunication system as recited in Claim 17 wherein said frame rebuilding means at each said selected stations in at least one of said first communication channel and said second communication channel receives said at least one equalizing signal for adjusting said payload pointer values in later-arriving said payload frame-pairs to reduce said difference signal associated with said later-arriving payload frame-pairs.
